(19) Europäisches Patentamt
European Patent Office
Office européen des brevets

(11) **EP 2 474 970 A1**

(12) **EUROPEAN PATENT APPLICATION**
published in accordance with Art. 153(4) EPC

(43) Date of publication:
**11.07.2012 Bulletin 2012/28**

(51) Int Cl.:
*G09G 3/36* *(2006.01)*        *G02F 1/133* *(2006.01)*
*G09G 3/20* *(2006.01)*        *G09G 3/34* *(2006.01)*
*H04N 5/66* *(2006.01)*

(21) Application number: **10812050.2**

(22) Date of filing: **30.08.2010**

(86) International application number:
**PCT/JP2010/064728**

(87) International publication number:
**WO 2011/025004 (03.03.2011 Gazette 2011/09)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **31.08.2009 JP 2009199482**

(71) Applicant: **Sharp Kabushiki Kaisha
Osaka-shi, Osaka 545-8522 (JP)**

(72) Inventors:
• **ONIKI, Motoyuki
Osaka 545-8522 (JP)**
• **IKEYAMA, Tetsuo
Osaka 545-8522 (JP)**

(74) Representative: **Müller - Hoffmann & Partner
Patentanwälte
Innere Wiener Strasse 17
81667 München (DE)**

(54) **LIQUID CRYSTAL DISPLAY DEVICE AND TELEVISION RECEIVER**

(57)     Provided are a liquid crystal display apparatus and a television receiver which enable an improvement in visibility in a low-tone range in a configuration in which the brightness of a backlight is changed on the basis of brightness information relating to an image, the liquid crystal display apparatus is provided with an APL curve setting portion and a histogram luminance modulating portion which adjust the brightness of the backlight and a tone signal on the basis of the average brightness of the image and the brightness histogram of the image, and a black extending portion which applies gamma correction to the tone signal adjusted by the histogram luminance modulating portion on the basis of a previously set gamma value, wherein a gamma characteristic used for the gamma correction in the black extending portion is set by, on the basis of correspondence information indicating the correspondence relationship between a combination of the brightness of backlight adjusted by the histogram luminance modulating portion and the environmental illuminance of the installation site of a liquid crystal panel, and a plurality of gamma values ($\gamma$2.0-2.4), selecting a gamma value corresponding to the combination.

FIG. 4

(a)

(b)

## Description

TECHNICAL FIELD

The present invention relates to a liquid crystal display apparatus such as a television receiver and a monitor having a liquid crystal panel and a backlight, and, more particularly, to a technique for a gamma correction of an input video signal in the liquid crystal display apparatus.

BACKGROUND ART

Generally, a liquid crystal display apparatus is equipped with a liquid crystal panel to display an image and a backlight to illuminate the liquid crystal panel from behind. This liquid crystal display apparatus, based on a video signal, controls driving of each liquid crystal element of the liquid crystal panel to change the transmittance of the each liquid crystal element. This adjusts the amount of transmission of the light from the backlight and displays the image based on the video signal on the liquid crystal panel. The signal used to control the transmittance of the liquid crystal element is hereinafter referred to as a gradation signal.
In the liquid crystal display apparatus, an intrinsic error is caused between the gradation signal input to the liquid crystal panel and actual display luminance. For example, the actual display luminance is not directly proportional to the gradation signal but changes exponentially.
Accordingly, to correct the error, the liquid crystal display apparatus executes a gamma correction to correct the gradation signal based on a gamma value intrinsic to the liquid crystal panel. The gamma value is an exponential value in the case of having a nonlinear function (gamma curve) expressing input gradation signal-display luminance characteristic (gamma characteristic) proximately expressed by an exponential function and black (lower gradation range) is output more thickly as this value becomes higher. Generally, the gamma value of the liquid crystal display apparatus is in the order of 2.2 and for example, the video signal of television broadcasting is a signal that has undergone an inverse gamma correction with the gamma value of 2.2.
On the other hand, in the liquid crystal display apparatus in which the luminance of the backlight is always constant, there has been a problem that the dynamic range of the video signal reproducible on the liquid crystal panel is limited by a control resolving power of the transmittance of each liquid crystal element of the liquid crystal panel.
Accordingly, for example, Patent Reference Document 1 proposes that not only the amount of light reduction (or transmittance) of the liquid crystal element but also the luminance of the backlight is changed based on luminance information such as average luminance of the image. Such a configuration, by combining the luminance of the backlight and the amount of light reduction of the liquid crystal element, can enhance the dynamic range of the video signal reproducible on the liquid crystal panel, as compared with the case of changing only the amount of light reduction of the liquid crystal element. In the case of low luminance information of the image, reduction of the luminance of the backlight can also achieve power consumption saving.

PRIOR ART DOCUMENT

PATENT DOCUMENT

.

Patent Document 1: Japanese Patent Publication No. 3513312

SUMMARY OF THE INVENTION

PROBLEM TO BE SOLVED BY THE INVENTION

In the configuration of changing the luminance of the backlight as well based on the luminance information of the image, however, the display luminance of the liquid crystal panel is determined by the combination of the gradation signal and the luminance of the backlight. For this reason, when the gamma correction is applied to the gradation signal by use of the gamma value established on the premise that the luminance of the backlight is always constant, the display luminance with which the image is displayed on the liquid crystal panel cannot be corrected appropriately and reproducibility of the image can possibly be lowered.
Viewer's judgment on visibility of the display image on the liquid crystal panel depends on a relative relationship of the luminance of the image on the liquid crystal panel and the illumination around the liquid crystal panel (environmental illumination). In particular, visibility of a lower gradation range of low brightness decreases as the environmental illumination becomes higher. For this reason, in the liquid crystal display apparatus that changes the luminance of the backlight, high viewer's visibility cannot be realized unless a relative relationship of the luminance of the backlight and the environmental illumination is also taken into consideration.

Therefore, the present invention is conceived in light of the above situation and the object thereof is to provide a liquid crystal display apparatus and a television receiver that are capable of enhancing visibility of a lower gradation range in a configuration of changing luminance of a backlight based on luminance information of the image.

MEANS FOR SOLVING THE PROBLEM

To achieve the object, the present invention is applied to a liquid crystal display apparatus comprising a liquid crystal panel that displays an image, a liquid crystal driving means that controls transmittance of each of liquid crystal elements of the liquid crystal panel depending on a gradation signal to be input, a backlight that illuminates the liquid crystal panel from behind, an environmental illumination detecting means that detects environmental illumination at an installation site of the liquid crystal panel, a gradation/luminance adjusting means that adjusts luminance of the backlight and the gradation signal based on luminance information of the image, and a gamma correcting means that applies a gamma correction based on a preset gamma value to the gradation signal adjusted by the gradation/luminance adjusting means. The liquid crystal display apparatus is configured to further comprise a gamma value setting means that sets the gamma value based on the luminance of the backlight adjusted by the gradation/luminance adjusting means and the environmental illumination detected by the environmental illumination detecting means.

Specifically, it is conceivable that the liquid crystal display apparatus further comprises a luminance information detecting means that detects average luminance of the image or luminance histogram of the image from a video signal to be input and that the luminance information of the image is the average luminance of the image or the luminance histogram of the image detected by the luminance information detecting means.

In the present invention, since the gamma value setting means can set the gamma value taking into consideration a relative relationship of the luminance of the backlight after the adjustment by the gradation/luminance adjusting means and the environmental illumination, it is made possible to set the gamma value so as to enhance visibility of the image, for example, of a lower gradation range. Therefore, the visibility of the image of the lower gradation range can be enhanced even in a configuration of changing the luminance of the backlight based on the luminance information of the image.

Specifically, it is conceivable that the gamma value setting means sets a lower gamma value as the luminance of the backlight after the adjustment by the gradation/luminance adjusting means becomes lower and sets a lower gamma value as the environmental illumination detected by the environmental illumination detecting means becomes higher.

By this, in the image displayed on the liquid crystal panel based on the gradation signal after the gamma correction, the lower gradation range of the image is lifted higher as the luminance of the backlight becomes lower and as the environmental illumination becomes higher and therefore, high visibility of the lower gradation range can be realized.

For example, it is conceivable that the liquid crystal display apparatus further comprises a correspondence information storing means that stores correspondence information indicative of a correspondence relationship of a combination of the luminance of the backlight and the environmental illumination and a plurality of gamma values and that the gamma value setting means, based on the combination of the luminance of the backlight adjusted by the gradation/luminance adjusting means and the environmental illumination detected by the environmental illumination detecting means and the correspondence information stored in the correspondence information storing means, selects the gamma value corresponding to the combination.

This makes it possible to speedily obtain the optimum gamma value depending on the combination of the luminance of the backlight after the adjustment by the gradation/luminance adjusting means and the environmental illumination.

Further, it is also conceivable that the gamma value setting means sets the gamma value based on the luminance of the backlight adjusted by the gradation/luminance adjusting means, the environmental illumination detected by the environmental illumination detecting means, and a preset relational equation.

Since this requires only the relational equation to be stored, there is no need for storing the correspondence information and a storage capacity of a storing means can be saved. A fine control can be performed based on the relational equation. Incidentally, the gamma value setting means is not limited to the one that sets the common gamma value for all gradations but it is also conceivable that the gamma value setting means sets only the gamma value to be used for the gamma correction of the gradation signal of a preset gradation range, such as changing only the gamma value to be used for the gamma correction of the lower gradation range. This makes it possible to enhance the visibility of the image of a certain gradation range for which the change is required, without affecting the gamma correction of other gradation than the certain gradation range. For example, low setting of only the gamma value to be used for the gamma correction of the lower gradation range will make it possible to express deep black as well as enhancing the visibility of the display image of the lower gradation range when the luminance of the backlight is low and the environmental illumination is low.

A television receiver comprising the liquid crystal display apparatus as well can be considered to be within the scope of the present invention.

EFFECT OF THE INVENTION

According to the present invention, since the gamma value setting means can set the gamma value taking into consideration a relative relationship of the luminance of the backlight after the adjustment by the gradation/luminance adjusting means and the environmental illumination, it is made possible to set the gamma value so as to enhance visibility of the image, for example, of a lower gradation range. Therefore, the visibility of the image of the lower gradation range can be enhanced even in a configuration of changing the luminance of the backlight based on the luminance information of the image.

BRIEF DESCRIPTION OF THE DRAWINGS

[Fig. 1] Fig. 1 is a block diagram of a schematic configuration of a liquid crystal display apparatus according to an embodiment of the present invention.
[Fig. 2] Fig. 2 is a block diagram of a schematic configuration of a display control portion in the liquid crystal display apparatus.
[Fig. 3] Fig. 3 is a diagram of one example of a relationship of a duty ratio of a backlight to average luminance of the image.
[Fig. 4] Fig. 4 is a diagram for description of one example of a gamma value.
[Fig. 5] Fig. 5 is a diagram for description of other example of the gamma value.
[Fig. 6] Fig. 6 is a diagram for description of other example of the gamma value.
[Fig. 7] Fig. 7 is a diagram for description of other example of the gamma value.

MODE FOR CARRYING OUT THE INVENTION

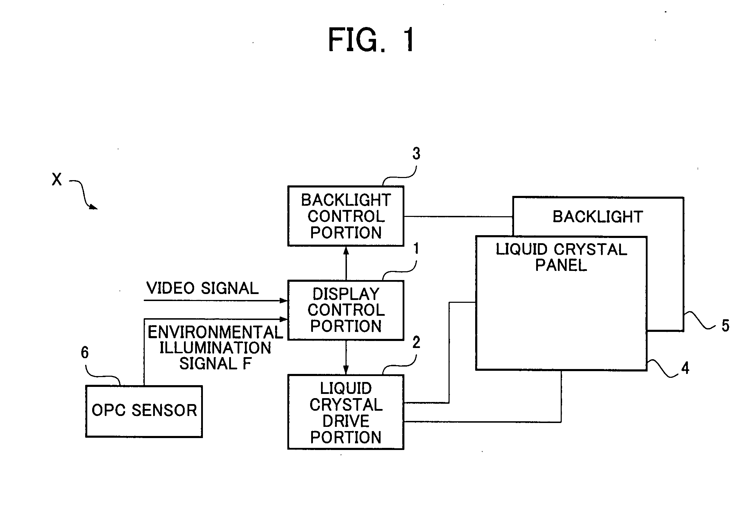

. An embodiment of the present invention will now be described for understanding of the present invention with reference to attached drawings. The following embodiment is one example of materialization of the present invention and is not intended to limit a technical scope of the present invention.
Firstly, a schematic configuration will be described of a liquid crystal display apparatus X according to the embodiment of the present invention with reference to Fig. 1.
As shown in Fig. 1, the liquid crystal display apparatus X has a display control portion 1, a liquid crystal driving portion 2, a backlight control portion 3, a liquid crystal panel 4, backlight 5, etc.
The liquid crystal display apparatus X is, for example, a display device, etc., used for a television receiver and a personal computer. That is to say, the present invention can be taken as an invention of the television receiver configured to include the liquid crystal display apparatus X. In this embodiment, description will be omitted of other constituent elements possessed by a general television receiver or display device that have no direct effect on the present invention.
The display control portion 1 receives a video signal contained in a television broadcast received by an antenna not shown, video contents input from an external input terminal not shown, etc.
The display control portion 1 generates a vertical synchronization signal and a horizontal synchronization signal based on the input video signal, etc., and inputs the vertical synchronization signal and the horizontal synchronization signal to the liquid crystal driving portion 2.
The display control portion 1 sets a duty ratio (lighting rate) to determine luminance of the backlight 5, based on the video signal, etc., and inputs the duty ratio to the backlight control portion 3.
Further, the display control portion 1 executes a gradation correction of the video signal, based on the luminance of the backlight 5, a preset gamma value, etc., and inputs a gradation signal after the correction to the liquid crystal driving portion 2.
The liquid crystal panel 4, composed of a liquid crystal layer and a scanning electrode and a data electrode to apply a scanning signal and a data signal to the liquid crystal layer, is a liquid crystal panel of a conventionally known active matrix type having a plurality of liquid crystal elements that change transmittance depending on an applied voltage.
The liquid crystal driving portion 2 drives the liquid crystal panel 4 in synchronization with the vertical synchronization signal and the horizontal synchronization signal input from the display control portion 1 and writes the video signal input from the display control portion 1 to the liquid crystal panel 4, thereby causing the liquid crystal panel 4 to display the image based on the video signal. Thus, since, in the liquid crystal display apparatus X, the image based on the video signal such as the television broadcast is displayed on the liquid crystal panel 4, the liquid crystal display apparatus X itself can be considered a television receiver. Specifically, the liquid crystal driving portion 2 controls the transmittance of each of liquid crystal elements of the liquid crystal panel 4 by controlling the voltage applied to each of the liquid crystal elements depending on the gradation signal input from the display control portion 1. The liquid crystal driving portion 2 is one example of a liquid crystal driving means.

The backlight 5, arranged on the back face of the liquid crystal panel 4, illuminates the liquid crystal panel 4 from behind. For example, the backlight 5 has a large number of LED light sources arrayed in correspondence to a display area of the liquid crystal panel 4. Needless to say, the backlight 5 is not limited to the LED light source but may be a backlight having a plurality of fluorescent tubes arranged in parallel in a vertical direction of the liquid crystal panel 4. The backlight control portion 3 controls a drive/non-drive and the luminance of the backlight 5. Specifically, the backlight control portion 3 adjusts the luminance obtained by the backlight 5 by controlling power to be supplied to the backlight 5 based on the duty ratio input from the display control 1 so as to control lighting/non-lighting of the backlight 5.

The liquid crystal display apparatus X is equipped with an OPC sensor 6. The OPC sensor 6 is an illumination sensor having a photoelectric conversion element to detect environmental illumination at the installation site of the liquid crystal panel 4 and inputs results of the detection (hereinafter referred to as "environmental illumination signal F") to the display control portion 1.

The display control portion 1 uses the environmental illumination signal F detected by the OPC sensor 6 in the setting of the luminance of the backlight 5 and in the gradation correction of the video signal.

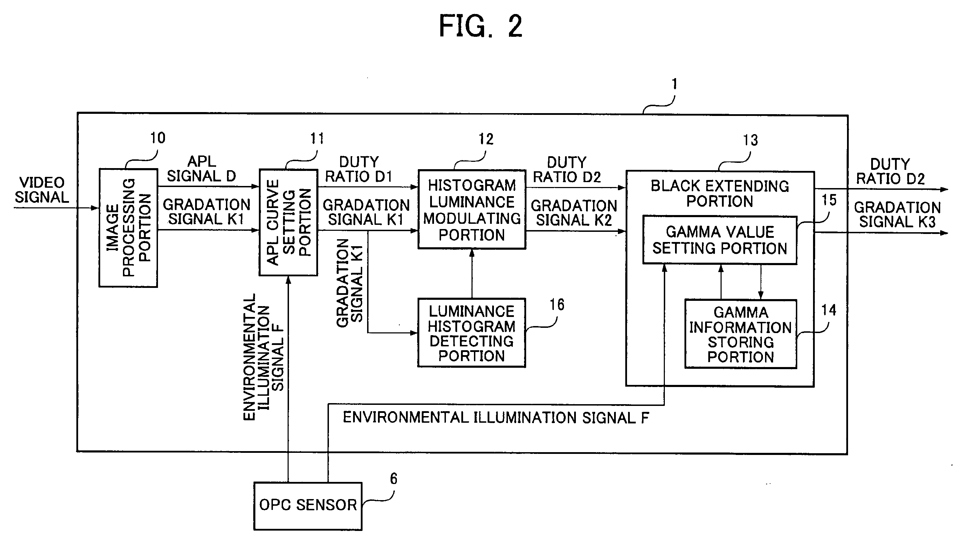

The display portion 1 will then be described in detail with reference to Fig. 2. Fig. 2 is a block diagram of a schematic configuration of the display control portion 1.

As shown in Fig. 2, the display control portion 1 has a video processing portion 10, an APL curve setting portion 11, a histogram luminance modulating portion 12, a black extending portion 13, a luminance histogram detecting portion 16, etc. In the display control portion 1, the video processing potion 10 has an APL signal detecting portion (not shown) disposed that, based on the video signal to be input, detects average luminance of the video signal. The APL signal detecting portion (not shown) inputs an APL signal D indicative of the average luminance of the video signal to the APL curve setting portion 11. The APL signal D indicates the average luminance of one frame of the image contained in the video signal.

The video processing portion 10 has a gradation signal generating portion (not shown) disposed that, based on the video signal to be input, generates a gradation signal of the video signal. The gradation signal generating portion (not shown) inputs a gradation signal K1 indicative of the gradation of the video signal to the APL curve setting portion 11.

The environmental illumination signal F from the OPC sensor 6 is input to the APL curve setting portion 11 as well. The gradation signal K1 of the video signal input to the display control portion 1 is input to the histogram luminance modulating portion 12 by way of the APL curve setting portion 11.

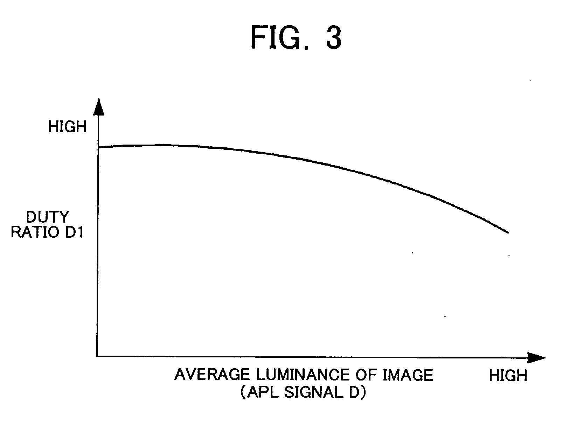

The APL curve setting portion 11, based on the environmental illumination signal F from the OPC sensor 6, sets an APL curve indicative of a relationship of the APL signal D and a duty ratio D1 (a%) of the backlight 5 suitable for the APL signal D as shown, for example, in Fig. 3.

Specifically, the APL curve is set so that the duty ratio D1 will become higher as the environmental illumination signal F from the OPC sensor 6 becomes higher (brighter) and that the duty ratio D1 will become lower as the environmental illumination signal F from the OPC sensor 6 becomes lower (darker).

For example, a memory (not shown) inside the APL curve setting portion 11 stores a plurality of APL curves corresponding to each of a plurality of ranges of the environmental illumination and the APL curve setting portion 11 selects the APL curve corresponding to the environmental illumination signal F from the OPC sensor 6, thereby setting the APL curve to be used for setting of the duty ratio D1.

The APL curve setting portion 11 sets the duty ratio D1 based on the APL signal D and the APL curve and inputs the duty ratio D1 to the histogram luminance modulating portion 12.

The luminance histogram detecting portion 16 detects a luminance histogram based on the gradation signal K1 to be input and outputs it to the histogram luminance modulating portion 12. The luminance histogram is obtained by counting the number of pixels for each level of luminance in the gradation signal K1 and presenting them in the form of a histogram.

The histogram luminance modulating portion 12 corrects the duty ratio D1 and the gradation signal K1 based on the luminance histogram detected by the luminance histogram detecting portion 16.

Specifically, to reduce the luminance of the backlight 5 to achieve power consumption saving, the histogram luminance modulating portion 12 sets the amount of reduction (b%) of the duty ratio D1 for reducing the luminance of the backlight 5 as much as possible within a range in which necessary display luminance can be realized.

The histogram luminance modulating portion 12 then multiplies the duty ratio D1 (a%) by the amount of reduction (b%) to calculate a duty ratio D2 (a%xb%) and outputs it to the black extending portion 13.

The histogram luminance modulating portion 12 corrects the gradation signal K1 based on the luminance of the backlight 5 to be determined by the duty ratio D2. The gradation signal after the correction is hereinafter referred to as K2. Specifically, when the histogram luminance modulating portion 12 makes the correction so that the luminance of the backlight 5 will be reduced, the gradation signal K2 is corrected to have a value higher than that of the gradation signal K1.

Thus, in the display control portion 1, the APL curve setting portion 11 and the histogram luminance modulating 12 adjust the luminance of the backlight and the gradation signal based on the average luminance of the image and the luminance histogram of the image. The APL curve setting portion 11 and the histogram luminance modulating 12 that perform such an adjustment correspond to a gradation/luminance adjusting means.

Therefore, in the liquid crystal display apparatus X, since the degree of freedom of the display luminance is enhanced by a combination of the luminance of the backlight 5 and the transmittance of the liquid crystal element of the liquid crystal panel 4, the dynamic range can be enhanced of the video signal reproducible on the liquid crystal panel 4, as compared with the case of changing only the transmittance of the liquid crystal element. The adjustment of the luminance of the backlight and the gradation signal based on either one of the average luminance of the image and a luminance spectrum of the image, namely, a configuration of having either one of the APL curve setting portion 11 and the histogram luminance modulating 12, is conceivable as other example.

The gradation signal K2 after the adjustment at the histogram luminance modulating portion 12 is input to the black extending portion 13. The black extending portion 13, equipped with a gamma information storing portion 14 and a gamma value setting portion 15, executes a so-called gamma correction, a correction of the gradation signal K2 based on the gamma value preset by the gamma value setting portion 15.

The liquid crystal display apparatus X according to the embodiment of the present invention is characterized in contents of processing of the gamma correction by the black extending portion 13 and this point will now be described.

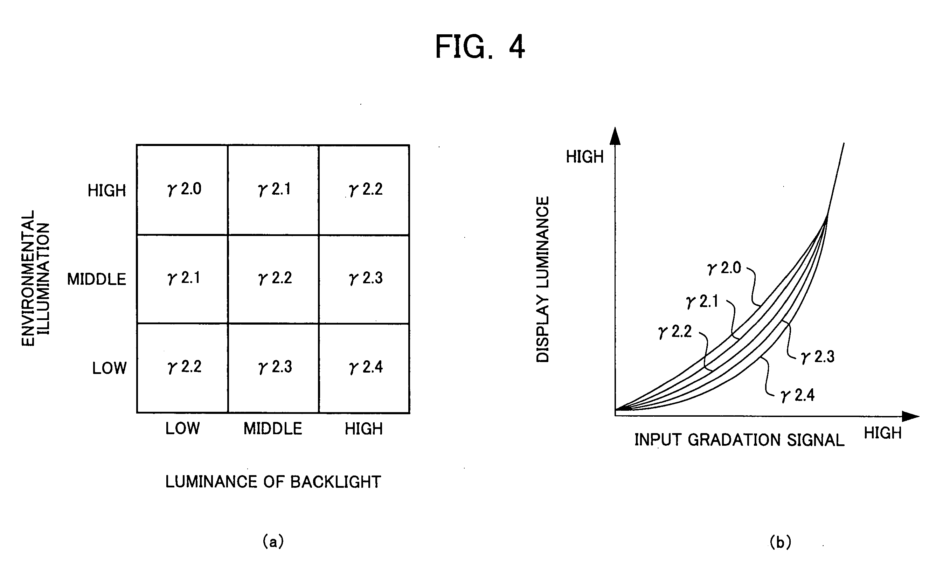

The gamma information storing portion 14 is a storing means (one example of correspondence information storing means) that stores correspondence information indicative of a correspondence relationship of a combination of the luminance of the backlight and the environmental illumination and a plurality of gamma values $\gamma$ 2.0 to 2.4, as shown in Fig. 4(a).

In the correspondence information, each of the luminance of the backlight and the environmental illumination is classified into three steps of low, middle, and high and the gamma values $\gamma$ 2.0 to 2.4 are related to combinations of these steps. Specifically, the lower gamma value is related to the lower luminance of the backlight and the higher gamma value is related to the higher luminance of the backlight. The lower gamma value is related to the higher environmental illumination and the higher gamma value is related to the lower environmental illumination. That is to say, the lowest gamma value $\gamma$ 2.0 is related to the combination of the lowest step (low) of the luminance of the backlight and the highest step (high) of the environmental illumination. Such a correspondence relationship is merely one example and the correspondence relationship of the combination of the luminance of the backlight and the environmental illumination and the plurality of gamma values may be determined, with relevant factors further broken down.

The gamma values $\gamma$ 2.0 to 2.4 are exponential values in the case of having a nonlinear function (gamma curve) expressing input gradation signal-display luminance characteristic (gamma characteristic) proximately expressed by an exponential function, as shown in Fig. 4(b) and black (lower gradation range) is output more thickly as the value becomes higher. Generally, the gamma value of the liquid crystal display apparatus is in the order of 2.2 and for example, the video signal of television broadcasting is a signal that has undergone an inverse gamma correction with the gamma value of 2.2.

On the other hand, the gamma value setting portion 15 sets the gamma value based on the duty ratio D2 indicative of the luminance of the backlight adjusted at the histogram luminance modulating portion 12 and the environmental illumination signal F detected by the OPC sensor 6. The gamma value setting portion 15 that executes such setting processing corresponds to a gamma value setting means.

Specifically, based on a combination of the duty ratio D2 indicative of the luminance of the backlight adjusted at the histogram luminance modulating portion 12 and the environmental illumination signal F indicative of the environmental illumination detected by the OPC sensor 6 and the correspondence information (see Fig. 4(a)) stored in the gamma information storing portion 14, the gamma value setting portion 15 selects the gamma value corresponding to the combination, thereby setting the gamma value to be used in gamma correction processing by the black extending portion 13. This enables an optimum gamma value to be obtained speedily.

Therefore, the gamma value setting portion 15 selects the gamma value of a comparatively low gamma value out of the gamma values $\gamma$ 2.0 to 2.2 when the luminance of the backlight 5 indicated by the duty ratio D2 finally corrected at the histogram illumination modulating portion 12 is low and selects the gamma value of a comparatively low gamma value out of the gamma values $\gamma$ 2.0 to 2.2 when the environmental illumination indicated by the environmental illumination signal F from the OPC sensor 6 is high.

The black extending portion 13 executes the gamma correction processing, using the gamma value set by the gamma value setting portion 15 and inputs a gradation signal K3 after the gamma correction processing and the duty ratio D2 to the liquid crystal driving portion 2.

By this, the liquid crystal driving portion 2 executes a driving control of the liquid crystal panel 4 based on the gradation signal K3 after the gamma correction processing and the backlight control portion 3 executes the driving control of the backlight 5 based on the duty ratio D2.

Thus, in the liquid crystal display apparatus X, the gamma value setting portion 15, considering a relative relationship of the luminance of the backlight 5 after the adjustment by the histogram luminance modulating portion 12 and the environmental illumination, sets a lower gamma value as the luminance of the backlight 5 becomes lower and as the environmental illumination becomes higher. Therefore, when the black extending portion 13 applies the gamma correction to the gradation signal based on the gamma value set at the gamma value setting portion 15, the visibility of the image of the lower gradation range can be enhanced even if the luminance of the backlight 5 is low and the environmental illumination is high.

While, in this embodiment, it is so arranged that the suitable gamma value is selected out of a plurality of kinds of gamma values γ2.0 to γ2.4 stored in the gamma information storing portion 14, depending on the combination of each region of the finally corrected duty ratio D2 and each region of the environmental illumination signal F from the OPC sensor 6, the gamma value may be set depending on an index value to be calculated based on the finally corrected duty ratio D2 indicative of the luminance of the backlight 5, the environmental illumination signal F from the OPC sensor 6, and a preset relational equation. In this case, since only the relational equation is required to be stored, there is no need for storing the correspondence information and a storage capacity of a storing means can be saved. A fine control can be performed based on the relational equation. For example, it is conceivable to change the characteristics of the gamma value selected depending on the luminance of the backlight 5 indicated by the duty ratio D2 based on a gain to be obtained from the luminance of the backlight 5 indicated by the duty ratio D2 and the environmental illumination signal F from the OPC sensor 6. Specifically, it is conceivable to calculate the gain for changing the gamma value by the following equation (1), where D2 is the duty ratio, F is the environmental illumination signal, G is the gain of the gamma value, Gal and Ga2 are gain coefficients, Fb is a preset reference value of the environmental illumination signal F, and Db is a preset reference value of the duty ratio:

$$G=Ga1 \times \sin\{(\pi/2) \times (F/Fb)\}+Ga2 \times \sin\{(\pi/2) \times (D2/Db)\}...(1)$$

In this case, the calculated gain G, if positive, changes the gamma value to a higher value, while the calculated gain G, if negative, changes the gamma value to a lower value. This makes it possible to finely relate the gamma value set based on the equation (1) to the relationship of the environmental illumination signal F and the duty ratio D2, achieving optimization of the gamma value.

A balance of tone and contrast can be adjusted by individually changing the values of the gain coefficients Gal and Ga2 of the equation (1).

For example, it is conceivable to make a setting emphasizing the contrast rather than the tone by setting the gain coefficient Ga1 or Ga2 small to make the gain G small, with respect to the contents such as sports for which emphasis on a contrast feeling is desired and on the contrary, to make a setting emphasizing the tone rather than the contrast feeling by setting the gain coefficient Gal or Ga2 at a rather large value to make the gain G large, with respect to the contents such as movies for which emphasis on the tone is desired. The gain coefficients Gal and Ga2 may have a same value.

Further, the gamma value setting portion 15 is not limited to the one that sets the common gamma value for all gradations but it is conceivable that the gamma value setting portion 15 sets only the gamma value to be used for the gamma correction of the gradation signal of a preset gradation range. Specifically, it is conceivable that a setting is made so that different gamma values are individually used depending on the gradation range, such as setting different gamma values for the lower gradation range and the higher gradation range. For example, only the gamma value to be used for the gamma correction of the gradation signal of a preset lower gradation-range can be set so that the visibility of the image of the lower gradation range can be enhanced.

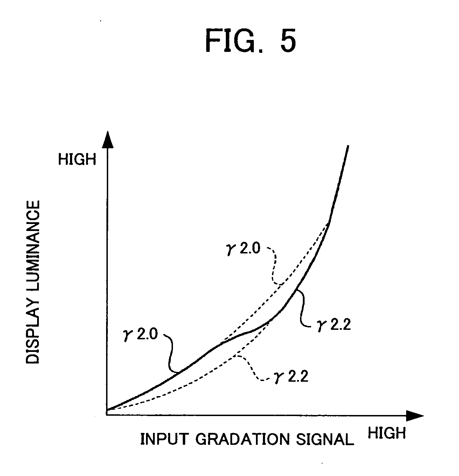

Fig. 5 depicts one example of the gamma curve that assumes different gamma values for the lower gradation range and the higher gradation range. In the gamma curve shown in Fig. 5, the gamma value of the lower gradation range lower than the midpoint of the entire gradation is given as γ2.0 and the gamma value of the higher gradation range is given as γ2.2 and these two are connected in such a manner that the transition becomes smooth in the vicinity of a branch point of the lower gradation range and the higher gradation range. Thus, low setting of the gamma value of only the lower gradation range will make it possible to express deep black as well as enhancing the visibility of the display image of the lower gradation range when the luminance of the backlight is low and the environmental illumination is low.

Specifically, it is conceivable that the gamma value setting portion 15 fixes the gamma value of the higher graduation range at γ2.2 and gets only the gamma value of the lower gradation range selected based on the correspondence information (see Fig. 4(a)) or calculated based on the equation (1). Needless to say, it is also conceivable to get the gamma value of the higher gradation range selected based on the correspondence information (see Fig. 4(a)) or calculated based on the equation (1), separately from the gamma value of the lower gradation range. The branch point of the higher gradation range and the lower gradation range may be set arbitrarily and it is also conceivable to set the gamma value by dividing the gradation into three or more ranges.

It may also be so arranged that a suitable gamma value will be selected out of the plurality of kinds of gamma values stored in the gamma information storing portion 14 depending on either one of the luminance of the backlight 5 indicated by the finally corrected duty ratio D2 and the environmental illumination signal F from the OPC sensor 6 and that the characteristics of the selected gamma value will be changed (corrected) based on the other one of the luminance of the backlight 5 indicated by the duty ratio D2 and the environmental illumination signal F from the OPC sensor 6.

EXAMPLE

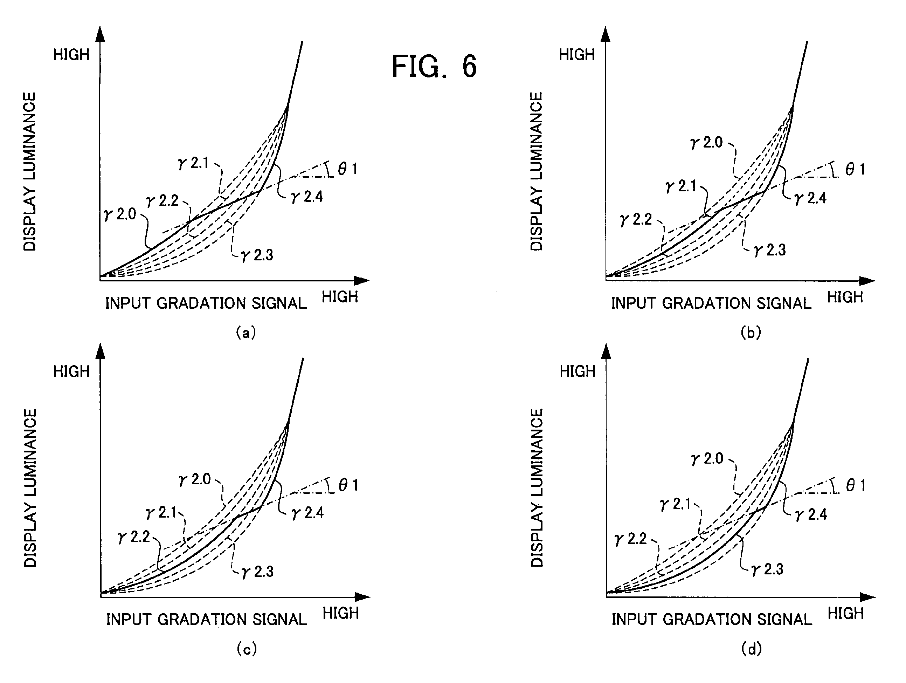

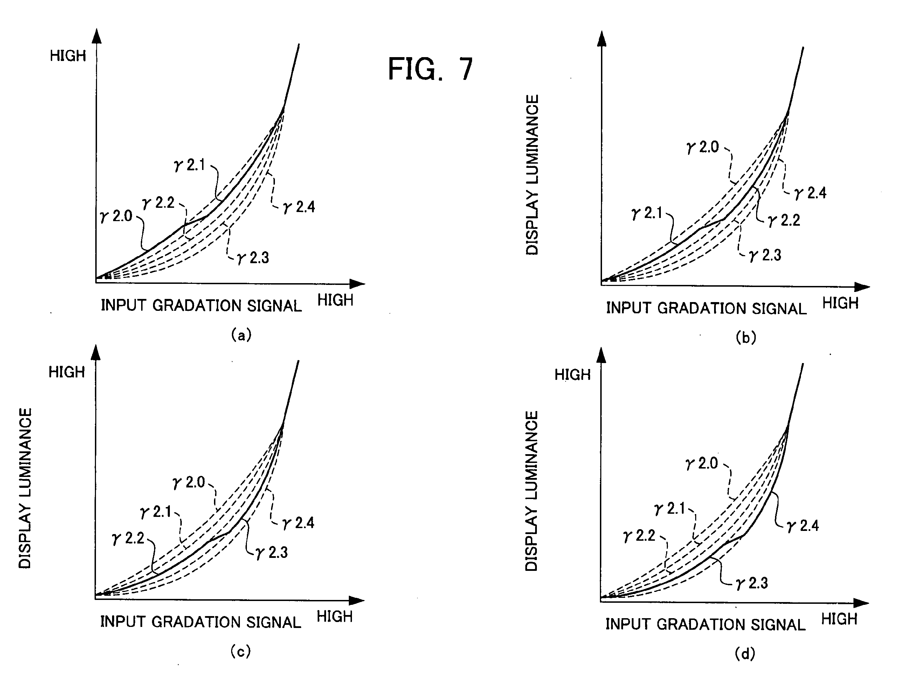

Figs. 6 and 7 are diagrams for description of other example of a technique of setting the gamma value by the gamma value setting portion 15.

Figs. 6 (a) to 6(d) depict the case of fixing the gamma value of the middle and high gradations at γ2.4 and changing only the gamma value of the low gradation susceptible to ambient brightness, etc., from γ2.0 to γ2.4 based on the luminance of the backlight and the environmental illumination. Thus, fixing the gamma value of the middle and high gradations has the advantage that even if the setting of the gamma value of the low gradation changes rapidly, there is no change in the contrast of the middle and high gradation ranges that often become the principal part of the image.

Incidentally, when the change is rapid at a switching part of the gamma value of the low gradation and the gamma value of the middle and high gradations, a lowering or reversal of the contrast of the image can be caused with respect to the gradation in the midst of the switching. For this reason, it is preferable to design so that the gradient at the time of the change at the switching part of the gamma value of the low gradation and the gamma value of the middle and high gradations will be equal to or greater than the gradient preset so as not to cause such a problem. This can reduce a feeling of strangeness that the image causes by the switching of the gamma values of the low gradation and the middle and high gradations. It is also conceivable to design so that, in any case of the difference between the gamma value of the low gradation and the gamma value of the middle and high gradations, the gradient of the switching part will be of a same angle of θ1 as shown in, for example, Figs. 6(a) to 6(d).

Figs. 7(a) to 7(d) depict the case of changing the gamma value of each of the low gradation and the middle and high gradations based on the luminance of the backlight and the environmental illumination. While the gamma value setting technique shown in Fig. 6 emphasizes the visibility of the image of the low gradation largely affected by the ambient brightness, it is also conceivable to set the gamma value considering the effect of the ambient brightness in the middle and high gradations as well. In this case, it is just necessary to change the gamma value of each of the low gradation and the middle and high gradations based on the luminance of the backlight and the environmental illumination. While it is also conceivable to change the gamma value of each of the low gradation and the middle and high gradations independently, the example of Fig. 7 shows that the gamma value of the low gradation and the gamma value of the middle and high gradations are changed at the same time so that the difference between the gamma values of the low gradation and the middle and high gradations will always be 0.1. This results in a small change of the gamma characteristics as a whole and therefore, the image that causes less feeling strangeness in whole can be displayed including the gradation of the switching part of the gamma values of the low gradation and the middle and high gradations. The difference between the gamma values of the low gradation and the middle and high gradations is not limited to 0.1 but can be arbitrarily preset so as to obtain desired characteristics.

INDUSTRIAL APPLICABILITY

The present invention is applicable to a liquid crystal display apparatus such as a television receiver and a display device.

EXPLANATIONS OF REFERENCE NUMERALS

| | |
|---|---|
| 1... | display control portion |
| 2... | liquid crystal driving portion |
| 3... | backlight control portion |
| 4... | liquid crystal panel |
| 5... | backlight |
| 6... | OPC sensor (environmental illumination detecting means) |
| 10... | video processing portion (luminance information detecting means) |
| 11... | APL curve setting portion |
| 12... | histogram luminance modulating portion |

13...          black extending portion (gamma correcting means)
14...          gamma information storing portion (correspondence information storing means)
15...          gamma value setting portion (gamma value setting means)
16...          luminance histogram detecting portion (luminance information detecting means)
X...          liquid crystal display apparatus
γ2.0 to γ2.4...      gamma value

**Claims**

**1.** A liquid crystal display apparatus comprising:

      a liquid crystal panel that displays an image;
      a liquid crystal driving means that controls transmittance of each of liquid crystal elements of the liquid crystal panel depending on a gradation signal to be input;
      a backlight that illuminates the liquid crystal panel from behind;
      an environmental illumination detecting means that detects environmental illumination at an installation site of the liquid crystal panel;
      a gradation/luminance adjusting means that adjusts luminance of the backlight and the gradation signal based on luminance information of the image; and
      a gamma correcting means that applies a gamma correction based on a preset gamma value to the gradation signal adjusted by the gradation/luminance adjusting means, and wherein
      the liquid crystal display apparatus further comprises:

           a gamma value setting means that sets the gamma value based on the luminance of the backlight adjusted by the gradation/luminance adjusting means and the environmental illumination detected by the environmental illumination detecting means.

**2.** The .liquid crystal display apparatus as defined in claim 1, further comprising:

      a luminance information detecting means that detects average luminance of the image and/or luminance histogram of the image from a video signal to be input, and wherein
      the luminance information of the image is the average luminance of the image and/or the luminance histogram of the image detected by the luminance information detecting means.

**3.** The liquid crystal display apparatus as defined in claim 1 or 2, wherein
the gamma value setting means sets a lower gamma value as the luminance of the backlight after the adjustment by the gradation/luminance adjusting means becomes lower and sets a lower gamma value as the environmental illumination detected by the environmental illumination detecting means becomes higher.

**4.** The liquid crystal display apparatus as defined in any one of claims 1 to 3, further comprising:

      a correspondence information storing means that stores correspondence information indicative of a correspondence relationship of a combination of the luminance of the backlight and the environmental illumination and a plurality of gamma values, and wherein
      the gamma value setting means, based on the combination of the luminance of the backlight adjusted by the gradation/luminance adjusting means and the environmental illumination detected by the environmental illumination detecting means and the correspondence information stored in the correspondence information storing means, selects the gamma value corresponding to the combination.

**5.** The liquid crystal display apparatus as defined in any one of claims 1 to 3, wherein
the gamma value setting means sets the gamma value based on the luminance of the backlight adjusted by the gradation/luminance adjusting means, the environmental illumination detected by the environmental illumination detecting means, and a preset relational equation.

**6.** The liquid crystal display apparatus as defined in any one of claims 1 to 5, wherein
The gamma value setting means sets only the gamma value to be used for the gamma correction of the gradation signal of a preset gradation range.

**7.** A television receiver comprising the liquid crystal display apparatus as defined in any one of claims 1 to 6.

FIG. 1

BACKLIGHT

LIQUID CRYSTAL PANEL

5

4

BACKLIGHT CONTROL PORTION

3

DISPLAY CONTROL PORTION

1

LIQUID CRYSTAL DRIVE PORTION

2

VIDEO SIGNAL

ENVIRONMENTAL ILLUMINATION SIGNAL F

OPC SENSOR

6

X

FIG. 2

# FIG. 3

HIGH

DUTY
RATIO D1

AVERAGE LUMINANCE OF IMAGE
(APL SIGNAL D)

HIGH

# FIG. 4

ENVIRONMENTAL ILLUMINATION

| | LOW | MIDDLE | HIGH |
|---|---|---|---|
| HIGH | $\gamma\,2.0$ | $\gamma\,2.1$ | $\gamma\,2.2$ |
| MIDDLE | $\gamma\,2.1$ | $\gamma\,2.2$ | $\gamma\,2.3$ |
| LOW | $\gamma\,2.2$ | $\gamma\,2.3$ | $\gamma\,2.4$ |

LUMINANCE OF BACKLIGHT

(a)

HIGH

DISPLAY LUMINANCE

$\gamma\,2.0$
$\gamma\,2.1$
$\gamma\,2.2$
$\gamma\,2.3$
$\gamma\,2.4$

INPUT GRADATION SIGNAL  HIGH

(b)

EP 2 474 970 A1

# FIG. 5

FIG. 6

# FIG. 7

## INTERNATIONAL SEARCH REPORT

| International application No. |
|---|
| PCT/JP2010/064728 |

**A. CLASSIFICATION OF SUBJECT MATTER**
*G09G3/36*(2006.01)i, *G02F1/133*(2006.01)i, *G09G3/20*(2006.01)i, *G09G3/34* (2006.01)i, *H04N5/66*(2006.01)i

According to International Patent Classification (IPC) or to both national classification and IPC

**B. FIELDS SEARCHED**

Minimum documentation searched (classification system followed by classification symbols)
G09G3/36, G02F1/133, G09G3/20, G09G3/34, H04N5/66

Documentation searched other than minimum documentation to the extent that such documents are included in the fields searched
Jitsuyo Shinan Koho          1922–1996    Jitsuyo Shinan Toroku Koho    1996–2010
Kokai Jitsuyo Shinan Koho    1971–2010    Toroku Jitsuyo Shinan Koho    1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-272156 A (Sharp Corp.), 30 September 2004 (30.09.2004), paragraphs [0038] to [0044]; fig. 7 to 9 (Family: none) | 1-7 |
| Y | JP 2009-180889 A (Sharp Corp.), 13 August 2009 (13.08.2009), entire text (Family: none) | 1-7 |
| Y | JP 2009-109900 A (Toshiba Corp.), 21 May 2009 (21.05.2009), entire text & US 2009/0115907 A1 | 1-7 |

| [X] Further documents are listed in the continuation of Box C. | [ ] See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 14 September, 2010 (14.09.10) | Date of mailing of the international search report 28 September, 2010 (28.09.10) |
|---|---|
| Name and mailing address of the ISA/ Japanese Patent Office | Authorized officer |
| Facsimile No. | Telephone No. |

**INTERNATIONAL SEARCH REPORT**

International application No.

PCT/JP2010/064728

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2006-133295 A (Sharp Corp.), 25 May 2006 (25.05.2006), paragraphs [0026] to [0029]; fig. 3 (Family: none) | 3 |
| A | JP 2007-171258 A (Sharp Corp.), 05 July 2007 (05.07.2007), entire text; fig. 3 (Family: none) | 1-7 |

**EP 2 474 970 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3513312 B